# EUROPEAN PATENT APPLICATION

(11) **EP 4 412 313 A1**
(43) Date of publication of application: **07.08.2024**
(21) Application number: 22876061.7
(22) Date of filing: 22.09.2022
(51) Int. Cl.: H04W 48/18, H04W 12/06, H04W 48/16, H04W 92/14

(54) **FIRST NODE, SECOND NODE, METHOD FROM FIRST NODE, AND METHOD FROM SECOND NODE**

(30) Priority: 29.09.2021 JP 2021160147
(71) Applicant: NEC Corporation, 108-8001 Tokyo (JP)
(72) Inventor: TAKAKURA Tsuyoshi, Tokyo 110-0012 (JP); TAMURA Toshiyuki, Tokyo 108-8001 (JP)
(74) Representative: MacDougall, Alan John Shaw
(86) International application number: PCT/JP2022/035493
(87) International publication number: WO 2023/054194

(57) **Abstract**

An object is to provide an apparatus, a method, and a program that contribute to an selecting an AMF to support UUAA-MM functionality in the UUAA-MM procedure. An access network node receives from a core network node information indicating whether authentication and authorization procedure for an UAV (UUAA-MM procedure) in mobility management is supported, receive from a UE information indicating an initiation request for the UUAA-MM procedure, and transmit a message requesting initiation of the UUAA-MM procedure to a core network node supporting the UUAA-MM procedure among the core network nodes. This allows the access network node to properly select the core network node that supports the UUAA-MM procedure.

## Description

### Technical Field

The present disclosure relates to a cellular network, and in particular to authentication and authorization of a drone system.

### Background Art

The 5G system (5GS) connects a radio terminal (user equipment (UE) or an Uncrewed Aerial Vehicle (UAV)) to a Data Network (DN). Hereinafter, a UE can be interpreted as UAV and vice versa. Connectivity services between the UE and the DN are supported by one or more Protocol Data Unit (PDU) sessions (see, for example, Non Patent Literature 1-3). A PDU session is an association, session, or connection between the UE and the DN. A PDU session is used to provide a PDU connectivity service (i.e., an exchange of PDUs between the UE and the DN). A PDU session is established between the UE and a User Plane Function (UPF) (i.e., PDU session anchor) to which the DN is connected. In terms of data transfer, a PDU session consists of a tunnel (N9 tunnel) in the 5G core network (5GC), a tunnel (N3 tunnel) between the 5GC and an Access Network (AN), and one or more radio bearers.

Non Patent Literature 2 and Non Patent Literature 3 specify the PDU session establishment procedure, the PDU session modification, and PDU session release procedures. More specifically, the PDU session establishment procedure is described, for example, in Chapter 4.3.2 of Non Patent Literature 2 and Chapter 6.4.1 of Non Patent Literature 3. The PDU session modification procedure is described, for example, in Chapter 4.3.3 of Non Patent Literature 2 and Chapter 6.4.2 of Non Patent Literature 3. The PDU session release procedure is described, for example, in Chapter 4.3.4 of Non Patent Literature 2 and Chapter 6.4.3 of Non Patent Literature 3.

The 5GS also supports network slicing (see, for example, Non Patent Literature 1 to 3, especially Section 5.15 of Non Patent Literature 1). Network slicing uses Network Function Virtualization (NFV) and software-defined networking (SDN) technologies, thereby creating multiple virtualized logical networks on top of physical networks. Each virtualized logical network is called a network slice. A network slice provides specific network capabilities and network characteristics. In order to form a single network slice, a network slice instance (NSI) is defined as a set of network function (NF) instances, resources (e.g., computer processing resources, storage, and networking resources), and an access network (AN) (at least one of a Next Generation Radio Access Network (NG-RAN) and a Non-3GPP Interworking Function (N3IWF)).

A network slice is identified by an identifier known as Single Network Slice Selection Assistance Information (S-NSSAI). The S-NSSAI consists of a Slice/Service type (SST) and a Slice Differentiator (SD). The SST refers to the expected network slice behavior in terms of features and services. The SD is optional information and complements the SST to differentiate amongst multiple network slices of the same Slice/Service type.

An S-NSSAI can have standard values or non-standard values. Currently, standard SST values 1, 2, 3, and 4 are associated respectively with enhanced Mobile Broad Band (eMBB), Ultra Reliable and Low Latency Communication (URLLC), Massive Internet of Things (MIoT), and Vehicle to Everything (V2X) slice types. A non-standard value of an S-NSSAI identifies a single network slice within a specific Public Land Mobile Network (PLMN). In other words, non-standard SST values are PLMN-specific values, and associated with the PLMN ID of a PLMN that has assigned them. Each S-NSSAI ensures network isolation by selecting a particular NSI. A NSI may be selected via different S-NSSAIs. An S-NSSAI may be associated with different NSIs. A network slice may be uniquely identified by an S-NSSAI.

There are two types of S-NSSAI, known as S-NSSAI and Mapped S-NSSAI. An S-NSSAI identifies a network slice served by a Public Land Mobile Network (PLMN) in which a UE is registered. A Mapped S-NSSAI may be an S-NSSAI of a Home PLMN (HPLMN) that is mapped to (associated with, or applicable to) an S-NSSAI that identifies a network slice of a roaming network when a UE is roaming, and also an S-NSSAI that is included in the subscription information of the UE. Thereafter, S-NSSAI and Mapped S-NSSAI may be collectively referred to as simply S-NSSAI in this specification.

Meanwhile, Network Slice Selection Assistance Information (NSSAI) means a set of S-NSSAIs. Accordingly, one or more S-NSSAIs can be included in one NSSAI. There are multiple types of NSSAI, known as Configured NSSAI, Requested NSSAI, Allowed NSSAI, Rejected NSSAI, and Pending NSSAI.

A Configured NSSAI includes one or more S-NSSAIs each applicable to one or more PLMNs. For example, The Configured NSSAI can include S-NSSAI and Mapped S-NSSAI. The Configured NSSAI is configured by a Serving PLMN and is applied to the Serving PLMN. Alternatively, the Configured NSSAI may be a Default Configured NSSAI. The Default Configured NSSAI is configured by the Home PLMN (HPLMN) and applies to any PLMNs for which no specific Configured NSSAI has been provided. For example, a radio terminal (User Equipment (UE)) is provisioned with the Default Configured NSSAI from a Unified Data Management (UDM) of the HPLMN via an Access and Mobility Management Function (AMF).

A Requested NSSAI is signaled by a UE to a network in, for example, a registration procedure, allowing the network to determine a serving AMF, at least one network slice and at least one NSIs, for this UE. The Requested NSSAI can include the S-NSSAI and the Mapped S-NSSAIs.

An allowed NSSAI is provided to a UE by a Serving PLMN and indicates one or more S-NSSAIs that the UE can use in the current Registration Area of the Serving PLMN. The Allowed NSSAI can include the S-NSSAI and the Mapped S-NSSAI. The Allowed NSSAI is determined by an AMF of the Serving PLMN, for example, during a registration procedure. Accordingly, the Allowed NSSAI is signaled to the UE by the network (i.e., AMF) and stored in (non-volatile) memories of both the AMF and the UE.

A Rejected NSSAI includes one or more S-NSSAIs rejected by the current (or serving) PLMN. When the UE is roaming, the Rejected NSSAI includes the S-NSSAI of the Home PLMN (HPLMN). The Rejected NSSAI may be referred to as rejected S-NSSAIs. A S-NSSAI is rejected throughout the current PLMN or rejected in the current registration area. If an AMF rejects any of one or more S-NSSAIs included in the Requested NSSAI, for example, in a registration procedure of a UE, it includes them in the Rejected NSSAI. The Rejected NSSAI is signaled to the UE by the network (i.e., AMF) and stored in (non-volatile) memories of both the AMF and the UE.

The Extended Rejected NSSAI includes one or more S-NSSAIs rejected by the current (or serving) PLMN. The Extended Rejected NSSAI can include an S-NSSAI and a Mapped S-NSSAI.

A Pending NSSAI indicates one or more S-NSSAIs for which Network Slice-Specific Authentication and Authorization (NSSAA)) is pending. The Pending NSSAI can include S-NSSAI and Mapped S-NSSAI. A Serving PLMN shall perform NSSAA for S-NSSAIs of the HPLMN which are subject to NSSAA based on subscription information. In order to perform NSSAA, an AMF invokes an Extensible Authentication Protocol (EAP)-based authorization procedure. The EAP-based authentication procedure takes a relatively long time to obtain its outcome. Accordingly, whilst the AMF determines an Allowed NSSAI as described above during a registration procedure of a UE, it does not include S-NSSAIs subject to NSSAA in the Allowed NSSAI, but instead them in the Pending NSSAI. The Pending NSSAI is signaled to the UE by the network (i.e., AMF) and stored in (non-volatile) memories of both the AMF and the UE.

An AMF manages a UE context for a UE in Registration Management (RM)-REGISTERED state. The UE context may be referred to as, but is not limited to, a Mobility Management (MM) context. The UE context may include one or more of the Allowed NSSAI, Rejected NSSAI, Extended Rejected NSSAI, and Pending NSSAI described above. On the other hand, the UE manages a UE NSSAI configuration, which includes the Configured NSSAI, Allowed NSSAI, Rejected NSSAI, Extended Rejected NSSAI, and Pending NSSAI described above. The UE NSSAI configuration is stored in a non-volatile memory in the UE (Mobile Equipment (ME) except Universal Subscriber Identity Module (USIM)). The memory or memory area where the UE NSSAI configuration is stored is referred to as NSSAI storage.

Section 5.15.10 of Non Patent Literature 1 and Section 4.2.9 of Non Patent Literature 2 specify the Network Slice-Specific Authentication and Authorization (NSSAA). More specifically, section 5.15.10 of Non Patent Literature 1 and section 4.2.9.2 of Non Patent Literature 2 describe the NSSAA. Section 5.15.10 of Non Patent Literature 1 and Section 4.2.9.3 of Non Patent Literature 2 describe the re-authentication and re-authorization triggered by an Authentication, Authorization and Accounting (AAA) server (AAA-S). Section 5.15.10 of Non Patent Literature 1 and Section 4.2.9.4 of Non Patent Literature 2 describe the revocation of Slice-Specific Authorization triggered by an AAA server (AAA-S).

Section 5.2 of Non Patent Literature 4 specifies UAV Authentication and Authorization (UUAA). More specifically, Sections 5.2.2, 5.2.3 and 5.2.4 of Non Patent Literature 4 describe UAV Authentication and Authorization (UUAA). Section 5.2.5 of Non Patent Literature 4 describes Authorization for C2 to implement Command and Control (C2) Communication (hereinafter, UAV Authentication and Authorization (UUAA) can be interpreted as C2 Communication Authorization (Authorization for C2) and vice versa).

The Third Generation Partnership Project (3GPP) SA2 working group has begun working on standardizing 5G architecture enhancements for UAVs to achieve drone systems utilizing mobile communication (see, for example, Non Patent Literature 4). The 5G architecture enhancements specify the following enhancements: the function to authenticate and authorize UAVs by a UAS (Uncrewed Aerial System) Service Supplier (USS) in mobility management. This UAV authentication and authorization is referred to as UUAA-MM. The 5G architecture enhancements also specify the following enhancement function: UAV authentication and authorization by the USS in session management. This UAV authentication and authorization is referred to as UUAA-SM. UUAA-MM and UUAA-SM may be referred to as UUAA. The 5G architecture enhancements also specify the following enhancement: C2 communication authorization function to implement C2 communication.

The UAV must be authenticated and authorized before it can use the UAS (Uncrewed Aerial System) Service. The UAS Service means communication with USS, C2 communication, remote identification of UAVs, and connectivity for location and tracking of UAVs to provide safe and efficient airspace utilization services.

The UE executes either a UUAA-MM procedure or a UUAA-SM procedure to undergo the authentication and authorization.

The UUAA-MM is executed when the registration procedure is executed based on the operator policy. The AMF executes the UUAA-MM procedure if Access and Mobility subscriber data of the UAV includes aerial UE subscription and a CAA (Civil Aviation Administration)-Level UAV Identity (CAA-Level UAV ID) is included in a registration request message. The CAA-Level-UAV ID is issued by the USS, which performs drone flight management, for example, and is used to identify the UAV.

When the UUAA-MM is not executed, the UUAA-SM is executed at the time when the PDU session establishment procedure (PDU session establishment and PDU session modification) is executed. The SMF executes the UUAA-SM procedure when DNN (Data Network Name) and/or S-NSSAI of the PDU session establishment are supported by the UAS service and the PDU session establishment procedure includes the CAA-Level UAV ID.

The UE must obtain C2 (Command and Control) communication authorization to enable operations based on the C2 communication. The C2 communication is propagating messages containing information about UAV operational commands and control from a UAV controller or UTM (UAS Traffic Management) to the UAV and reporting telemetry data from the UAV to the UAV controller or UTM. The UTM is a system that enables flying UAVs to safely and efficiently share airspace with other users.

The C2 communication authorization may be performed in the UUAA-SM procedure described above or after UAV authentication and authorization have been performed. When the C2 communication authorization is executed after the UAV authentication and authorization, the UE executes a PDU session modification procedure including the CAA-Level UAV ID and C2 authorization information. The SMF executes a C2 communication authorization procedure when the DNN and/or S-NSSAI of the PDU session to be modified are supported by the UAS service and the PDU session modification procedure includes the CAA-Level UAV ID.

In the UUAA-MM, UUAA-SM, and C2 communication authorization described above, after each procedure is initiated, exchanges of authentication and/or authorization information between the USS and the UE are performed multiple times, and the UE is notified of the results of authentication and authorization. In the UUAA-MM procedure, a DL NAS TRANSPORT message transmitted by the AMF to the UE includes the result of authentication and authorization. In the UUAA-SM procedure, a PDU session accept message transmitted by the SMF to the UE includes the result of authentication and authorization.

### Citation List

### Non Patent Literature

Non Patent Literature 1: 3GPP TS 23.501 V17.2.0 (2021-09) "3rd Generation Partnership Project; Technical Specification Group Services and System Aspects; System architecture for the 5G System (5GS); Stage 2 (Release 17)", September 2021
Non Patent Literature 2: 3GPP TS 23.502 V17.2.0 (2021-09) "3rd Generation Partnership Project; Technical Specification Group Services and System Aspects; Procedures for the 5G System (5GS); Stage 2 (Release 17)", September 2021
Non Patent Literature 3: 3GPP TS 24.501 V17.4.1 (2021-09) "3rd Generation Partnership Project; Technical Specification Group Core Network and Terminals; Non-Access-Stratum (NAS) protocol for 5G System (5GS); Stage 3 (Release 17)", September 2021
Non Patent Literature 4: 3GPP TS 23.256 V17.0.0 (2021-09) "3rd Generation Partnership Project; Technical Specification Group Services and System Aspects; Support of Uncrewed Aerial Systems (UAS) connectivity, identification and tracking; Stage 2 (Release 17)", September 2021

### Summary of Invention

### Technical Problem

The inventors have studied and discovered various issues related to authentication and re-authorization procedures for a UAS Service. One of these challenges is that it is unclear how an AN selects an AMF in the UUAA-MM procedure.

Another challenge is that it is unclear how the AMF and the UE behave when an USS is not found in the UUAA-MM procedure.

One of the objects that the example embodiments disclosed herein seek to achieve is to provide an apparatus, a method, and a program that contribute to an AN selecting an AMF to support UUAA-MM functionality in the UUAA-MM procedure. It should be noted that this object is only one of a plurality of objects that the example embodiments disclosed herein seek to achieve. Other objects or issues and novel features are apparent from the description or accompanying drawings herein.

### Solution to Problem

In a first aspect, an access network node includes: a memory; and at least one processor coupled to the memory. The at least one processor is configured to receive from at least one core network node first information indicating whether authentication and authorization procedure for an Uncrewed Aerial Vehicle (UAV) (UUAA-MM procedure) in mobility management is supported. The at least one processor is configured to receive from a User Equipment (UE) second information indicating an initiation request for the UUAA-MM procedure after receiving the first information. The at least one processor is configured to transmit, in response to the receipt of the second information, a message requesting the initiation of the UUAA-MM procedure to a first core network node supporting the UUAA-MM procedure among the at least one core network node.

In a second aspect, a method in access network node includes: receiving from at least one core network node first information indicating whether authentication and authorization procedure for an Uncrewed Aerial Vehicle (UAV) (UUAA-MM procedure) in mobility management is supported; receiving from a User Equipment (UE) second information indicating an initiation request for the UUAA-MM procedure after receiving the first information; and transmitting, in response to the receipt of the second information, a message requesting the initiation of the UUAA-MM procedure to a first core network node supporting the UUAA-MM procedure among the at least one core network node.

In a third aspect, a core network node includes: a memory; and at least one processor coupled to the memory. The at least one processor is configured to transmit to an access network node first information indicating whether authentication and authorization procedure for Uncrewed Aerial Vehicles (UAV) (UUAA-MM procedure) in mobility management is supported. The at least one processor is configured to receive from the access network node a message requesting initiation of the UUAA-MM procedure. The at least one processor is configured to initiate the UUAA-MM procedure for a User Equipment (UE) based on the message. The message is transmitted from the core network node to the access network node in response to the access network node receiving from the UE the second information indicating an initiation request for the UUAA-MM procedure from the access network node after the first information has been transmitted from the core network node to the access network node.

In a fourth aspect, a method in a core network node includes: transmitting to an access network node first information indicating whether authentication and authorization procedure for Uncrewed Aerial Vehicles (UAV) (UUAA-MM procedure) in mobility management is supported; receiving from the access network node a message requesting initiation of the UUAA-MM procedure; and initiating the UUAA-MM procedure for a User Equipment (UE) based on the message. The message is transmitted from the access network node to the access network node after the first information is transmitted from the core network node to the access network node when the access network node receives from the UE the second information instructing the initiation request for the UUAA-MM procedure.

In a fifth aspect, an User Equipment (UE) includes: a memory; and at least one processor coupled to the memory. The at least one processor is configured to transmit to an access network node second information indicating an initiation request for authentication and authorization procedure for an Uncrewed Aerial Vehicle (UAV) (UUAA-MM procedure) in mobility management. The at least one processor is configured to perform the UUAA-MM procedure with a core network node supporting the UUAA-MM procedure. The access network node receiving the second information transmits to the core network node a message requesting initiation of the UUAA-MM procedure. The core network node is selected based on the first information received by the access network node from the core network node indicating whether the UUAA-MM procedure is supported.

In a sixth aspect, a method in a User Equipment (UE) includes: transmitting to an access network node second information indicating an initiation request for authentication and authorization procedure for an Uncrewed Aerial Vehicle (UAV) (UUAA-MM procedure) in mobility management; and performing the UUAA-MM procedure with a core network node supporting the UUAA-MM procedure. The access network node receiving the second information transmits to the core network node a message requesting initiation of the UUAA-MM procedure. The core network node is selected based on the first information received by the access network node from the core network node indicating whether the UUAA-MM procedure is supported.

In a seventh aspect, a first core network node includes: a memory; and at least one processor coupled to the memory. The at least one processor is configured to receive from a User Equipment (UE) a first NAS message including an address of a Uncrewed Aerial System (UAS) Service Supplier (USS). The at least one processor is configured to transmit to a second core network node providing a UAS service an invocation message of a Network Exposure Function (NEF) authentication service including the address of the USS. The at least one processor is configured to receive a response message to the invocation message from the second core network node. The at least one processor is configured to transmit to the UE information indicating a service failure for the USS corresponding to the address of the USS if the response message includes a failure cause for the USS corresponding to the address of the USS.

In an eighth aspect, a method in a first core network node includes: receiving from a User Equipment (UE) a first NAS message including an address of a Uncrewed Aerial System (UAS) Service Supplier (USS); transmitting to a second core network node providing a UAS service an invocation message of a Network Exposure Function (NEF) authentication service including the address of the USS; receiving a response message to the invocation message from the second core network node; and transmitting to the UE information indicating a service failure for the USS corresponding to the address of the USS if the response message includes a failure cause for the USS corresponding to the address of the USS.

In a ninth aspect, a User Equipment (UE) includes: a memory; and at least one processor coupled to the memory. The at least one processor is configured to transmit to a first core network node a first NAS message including an address of an Uncrewed Aerial System (UAS) Service Supplier (USS). The at least one processor is configured to receive from the first core network node information indicating a service failure for the USS corresponding to the address of the USS, when a response message to an invocation message of a Network Exposure Function (NEF) authentication service including the address of the USS received by the first core network node from a second core network node providing a UAS service includes a failure cause for the USS corresponding to the address of the USS.

In a tenth aspect, a method in a User Equipment (UE) includes: transmitting to a first core network node a first NAS message including an address of an Uncrewed Aerial System (UAS) Service Supplier (USS); and receiving from the first core network node information indicating a service failure for the USS corresponding to the address of the USS, when a response message to an invocation message of a Network Exposure Function (NEF) authentication service including the address of the USS received by the first core network node from a second core network node providing a UAS service includes a failure cause for the USS corresponding to the address of the USS.

In an eleventh aspect, a second core network node providing an Uncrewed Aerial System (UAS) service includes: a memory; and at least one processor coupled to the memory. The at least one processor is configured to receive from a first core network node an invocation message of a Network Exposure Function (NEF) authentication service including an address of a UAS Service Supplier (USS). The at least one processor is configured to transmit to the first core network node a response message to the invocation message. The response message includes a failure cause for the USS corresponding to the address of the USS, thereby causing the first core network node to transmit to the UE information indicating a service failure for the USS corresponding to the address of the USS.

In a twelfth aspect, a method in a second core network node providing an Uncrewed Aerial System (UAS) service includes: receiving from a first core network node an invocation message of a Network Exposure Function (NEF) authentication service including an address of a UAS Service Supplier (USS); and transmitting to the first core network node a response message to the invocation message. The response message includes a failure cause for the USS corresponding to the address of the USS, thereby causing the first core network node to transmit to the UE information indicating a service failure for the USS corresponding to the address of the USS.

In a thirteenth aspect, a program includes instructions (software codes) that, when loaded into a computer, causes the computer to perform the method according to the second, fourth, sixth, eighth, tenth, and twelfth aspects described above.

### Advantageous Effects of Invention

According to the above aspects, it is possible to provide an apparatus, a method, and a program that contribute to an AN selecting an AMF to support UUAA-MM functionality in the UUAA-MM procedure.

### Brief Description of Drawings

Fig. 1 shows a configuration example of a cellular network according to an example embodiment;
Fig. 2 is a flowchart showing an example of an operation of an AN according to the example embodiment;
Fig. 3 is a sequence diagram showing an example of an operation of the AN and an AMF according to the example embodiment;
Fig. 4 is a sequence diagram showing an example of an operation of the AN and the AMF according to the example embodiment;
Fig. 5 is a sequence diagram showing an example of an operation of a UE, the AN, and the AMF according to the example embodiment;
Fig. 6 is a flowchart showing an example of an operation of the AMF according to the example embodiment;
Fig. 7 is a sequence diagram showing an example of an operation of the UE, the AMF, and a UAS NF according to the example embodiment;
Fig. 8 is a flowchart showing an example of an operation of the AMF according to the example embodiment;
Fig. 9 is a sequence diagram showing an example of an operation of the UE, the AMF, and a UAS NF according to the example embodiment;
Fig. 10 is a block diagram showing a configuration example of the UE according to the example embodiment; and
Fig. 11 is a block diagram showing a configuration example of the AMF according to the example embodiment.

### Example Embodiment

Hereinafter, specific example embodiments will be described in detail with reference to the drawings. In each drawing, the same or corresponding elements are given the same reference signs, and repeated descriptions will be omitted as necessary for clarity of description.

The example embodiments described below may be implemented independently or in combination as appropriate. These example embodiments have novel features that differ from each other. Thus, the plurality of example embodiments contribute to solving different objects or problems and to achieving different effects.

The following descriptions on the example embodiments mainly focus on the 3rd Generation Partnership Project (3GPP) fifth generation mobile communication system (5G system (5GS)). However, these example embodiments may be applied to other cellular communication systems that support network slicing similar to that of the 5GS.

In particular, the plurality of example embodiments shown below may be applied to the 3GPP 4th generation mobile communication system (Evolved Packet System (EPS)), as an example, according to the vocabulary shown in Table 1.

**[Table 1]**

| Terminology used in the present disclosure | Terminology for application to EPS |
|---|---|
| AMF | MME |
| SMF | SGW |
| UDM | HSS |
| PDU session | PDN connection |

| NGAP message | S1AP message |
|---|---|
| REGISTRATION REQUEST message | ATTACH Request message or Tracking Area Update message |
| NG SETUP REQUEST message | S1 SETUP REQUEST message |
| NG SETUP RESPONSE message | S1 SETUP RESPONSE message |
| RAN CONFIGURATION UPDATE message | ENB CONFIGURATION UPDATE message |
| RAN CONFIGURATION UPDATE ACKNOWLEDGE message | ENB CONFIGURATION UPDATE ACKNOWLEDGE message |
| AMF CONFIGURATION UPDATE message | MME CONFIGURATION UPDATE message |
| AMF CONFIGURATION UPDATE ACKNOWLEDGE message | MME CONFIGURATION UPDATE ACKNOWLEDGE message |

### <First example embodiment>

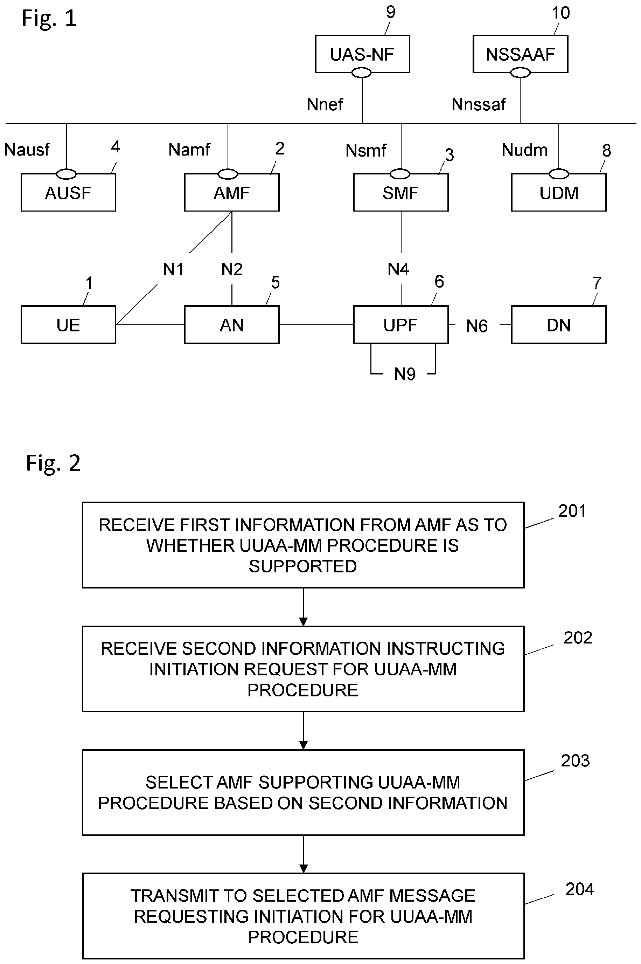

Fig. 1 shows a configuration example of a cellular network (i.e., 5GS) according to this example embodiment. Each of the elements shown in Fig. 1 is a network function and provides an interface as defined by the 3rd Generation Partnership Project (3GPP). Each of the elements (network functions) shown in Fig. 1 can be implemented, for example, as a network element on dedicated hardware, as a software instance running on dedicated hardware, or as a virtual function instantiated on an application platform.

The cellular network shown in Fig. 1 may be provided by a Mobile Network Operator (MNO), or it may be a Non-Public Network (NPN) provided by a non-MNO. If the cellular network shown in Fig. 1 is an NPN, it may be an independent network, represented as a Stand-alone Non-Public Network (SNPN), or it may be an NPN linked to an MNO network, represented as a public network integrated NPN.

A radio terminal (i.e., UE or UAV) 1 uses 5G connectivity services and communicates with a data network (DN) 7. More specifically, the UE 1 is connected to an access network (i.e., 5G Access Network (5GAN)) 5 and communicates with the data network (DN) 7 via a User Plane Function (UPF) 6 in a core network (i.e., 5G core network (5GC)). The AN 5 may include a Next Generation Radio Access Network (NG-RAN) or a non-3GPP AN, or both. The non-3GPP AN may be a network that handles wireless LAN (WiFi) communications or a network that handles wired communications, referred to as a Wireline 5G Access Network (W-5GAN). The UPF 6 may include multiple UPFs that are interconnected. Hereinafter, the UE can be interpreted as UAV and vice versa.

In the 5G architecture, the connectivity service between the UE 1 and the DN 7 is supported by one or more Protocol Data Unit (PDU) sessions. A PDU session is an association, session, or connection between the UE 1 and the DN 7. A PDU session is used to provide a PDU connectivity service (i.e., an exchange of PDUs between the UE 1 and the DN 7). The UE 1 establishes one or more PDU sessions between the UE 1 and the UPF 6 (i.e., the PDU session anchor) to which the DN 7 is connected. In terms of data transfer, a PDU session consists of a tunnel (N9 tunnel) in the 5GC, a tunnel (N3 tunnel) between the 5GC and the AN 5 and one or more radio bearers. The UE 1 may establish multiple PDU sessions with multiple UPFs (PDU session anchors) 6 in order to concurrently access multiple DNs 7.

The AMF 2 is one of the network functions in the 5GC Control Plane. The AMF 2 provides the termination of a RAN Control Plane (CP) interface (i.e., N2 interface). The AMF 2 terminates a single signalling connection (i.e., N1 NAS signalling connection) with the UE 1 and provides registration management, connection management, and mobility management. The AMF 2 provides NF services to NF consumers (e.g., other AMFs, Session Management Function (SMF) 3, and Authentication Server Function (AUSF) 4) on a service-based interface (i.e., Namf interface). The NF services provided by the AMF 2 include a communication service (Namf_Communication). The communication service allows NF consumers (e.g., SMF 3) to communicate with the UE 1 or AN 5 via the AMF 2.

The SMF 3 is one of the network functions in the 5GC Control Plane. The SMF 3 manages PDU sessions. The SMF 3 sends and receives SM signalling messages (NAS-SM messages, N1 SM messages) to and from the Non-Access-Stratum (NAS) Session Management (SM) layer of the UE 1 via communication services provided by the AMF 2. The SMF 3 provides NF services on a service-based interface (i.e., Nsmf interface) to NF consumers (e.g., AMF 2, other SMFs). The NF services provided by the SMF 3 include a PDU session management service (Nsmf_PDUSession), which allows the NF consumer (e.g., AMF 2) to handle PDU sessions. The SMF 3 may be an Intermediate SMF (I-SMF). The I-SMF is inserted between the AMF 2 and an original SMF 3 as needed when the UPF 6 belongs to a different SMF service area and cannot be controlled by the original SMF.

The AUSF 4 is one of the network functions in the 5GC Control Plane. The AUSF 4 provides NF services on a service based interface (i.e., Nausf interface) to NF consumers (e.g., AMF 2, UDM 8). The NF services provided by the AUSF 4 include a UE authentication service (e.g., Nausf_UEAuthentication and Nausf_NSSAA_Authenticate). The Nausf_UEAuthentication service provides UE authentication and related key information (keying material) to the NF consumer (i.e., AMF). More specifically, the AUSF 4 cooperates with the UDM 8 and Authentication credential Repository and Processing Function (ARPF) to perform authentication using one of the two authentication methods (i.e., 5G-Authentication and Key Agreement (AKA) and EAP-based authentication) supported by the 5GS. After performing the authentication, the AUSF 4 replies to the AMF 2 with the authentication result and, if successful, a master key. The master key is used by the AMF 2 to derive NAS security keys and other security key(s). For UE authentication, the AUSF 4 works closely with the UDM 8. The Nausf_NSSAA_Authenticate service provides the NF consumer (e.g., AMF 2) with a Network Slice-Specific Authentication and Authorization service between the UE 1 and an AAA server via the AUSF 4.

The UDM 8 is one of the network functions in the 5GC Control Plane. The UDM 8 provides access to a database (i.e., User Data Repository (UDR)) storing subscriber data (subscription information). The UDM 8 provides NF services on a service-based interface (i.e., Nudm interface) to NF consumers (e.g., AMF 2, AUSF 4, SMF 3). The NF services provided by the UDM 8 include a subscriber data management service, which allows the NF consumer (e.g., AMF) to retrieve subscriber data and provides updated subscriber data to the NF consumer.

A UAS NF 9 is one of the network functions in the 5GC Control Plane. The UAS NF 9 is supported by the NEF (Network Exposure Function) or SCEF (Service Capability Exposure Function) +NEF and is used for external exposure of services to the USS. The UAS NF 9 uses the existing NEF/SCEF external exposure in controlling UAV authentication/authorization, UAV flight authorization, UAV-UAVC pairing authorization, and their revocation, location reporting, and QoS/traffic filtering for the C2 communications. The UAS NF 9 may be implemented and deployed in the form of a dedicated NEF that implements only the UAS NF function. Note that SCEF+NEF is a node that integrates SCEF, a 4G logical node, and NEF, a 5G logical node, in order to smoothly perform 4G and 5G interworking. The SCEF+NEF node is associated with the UE for Service Capability Exposure if the UE supports mobility between EPS and 5GS.

The UAS NF 9 stores and maintains information about whether re-authentication is in the AMF or SMF/SMF+PGW-C and the address of the serving AMF or SMF/SMF+PGW-C to support a re-authentication request by the USS. In addition, the UAS NF 9 stores and maintains the result of the UUAA-MM procedure and the result of the UUAA-SM procedure. SMF+PGW-C is a node that integrates PGW-C, a 4G logical node, and SMF, a 5G logical node, in order to smoothly perform 4G and 5G interworking. The SMF/PGW-C is a core network node used for PDN connectivity when 5GS and EPS interworking is supported.

An NSSAAF (Network Slice-specific and SNPN Authentication and Authorization Function) 10 connects to an AAA server (AAA-S), which is an authentication server, and supports network slice-specific authentication and authorization functions. If the AAA-S belongs to a third party, the NSSAAF connects to the AAA-S via the AAA proxy (AAA-P).

A configuration example of Fig. 1 shows only representative NFs for explanatory purposes. The cellular network according to this example embodiment may include other NFs not shown in Fig. 1, such as Network Slice Selection Function (NSSF), Policy Control Function (PCF), Application Function (AF), NEF (Network Exposure Function), and Network Repository Function (NRF).

The inventors have studied and discovered various issues related to the UUAA-MM procedures. For example, it is not clear how the AN 5 will select the AMF 2 to support the UUAA-MM procedure.

This example embodiment provides a solution for selecting an AMF with the UUAA-MM function in the registration procedure.

Fig. 2 is a flowchart showing an example of the operation of the AN 5 according to this example embodiment. In step 201, the AN 5 receives information from the AMF 2 as to whether it supports the UUAA-MM procedure as the capability of the AMF 2. This step may be received at initiation or at periodic configuration updates of the AN 5. For example, it may be received in an NG SETUP RESPONSE message or an AMF CONFIGURATION UPDATE message.

In step 202, the AN 5 receives from the UE 1 an RRC message that includes at least one of the following parameters: a dedicated NAS Message parameter set with a Registration Request message including information indicating an initiation request for the UUAA-MM procedure, a parameter indicating an initiation request for the UUAA-MM procedure, and a parameter set with information instructing USS. The information indicating the initiation request for the UUAA-MM procedure may be a CAA-Level UAV ID or a function type (type) expected by the UE 1 from the network. The function type expected by the UE 1 is not limited to this but may include, for example, "uav", "uuaa", "uuaa-mm", "uuaa-sm", and "c2" either individually or in combination. In addition, the information indicating the initiation request for the UUAA-MM procedure may be indicated by a Service Type (SST) in the Single Network Slice Selection Assistance Information (S-NSSAI) corresponding to the UUAA-MM procedure or the Slice Differentiator (SD) corresponding to the UUAA-MM procedure as a value of the network slice. The information indicating the initiation request for the UUAA-MM procedure is set in the NAS message and the AS message (RRC message), which may be indicated in the same information format for both or in specific information formats for each.

The parameter instructing the initiation of the UUAA-MM procedure may be a parameter requiring the AN 5 to select the AMF 2 that supports the UUAA-MM procedure.

The information instructing the USS may be a CAA-Level UAV ID, USS address, or other information indicating the USS. If the information instructing the USS is indicated by a value of the network slice, it may be indicated by the service type (SST) corresponding to the USS in the Single Network Slice Selection Assistance Information (S-NSSAI) or the Slice Differentiator (SD) corresponding to the USS. The information instructing the USS may be a message requesting the AN 5 to consider whether there is connectivity between the USS and the AMF 2 when selecting the AMF 2.

In step 203, the AN 5 selects the AMF 2 based on at least one of the information received in the AS message (RRC message) indicating the initiation request for the UUAA-MM procedure and the information instructing the USS. Specifically, the AN 5 may use the information indicating the initiation request for the UUAA-MM procedure, the information instructing the USS, or the information indicating the initiation request for the UUAA-MM procedure and the information instructing the USS to select an appropriate AMF 2 that supports the UUAA-MM procedure, taking into account the capability of the AMF 2 received in step 201. Specifically, the AN 5 may select an AMF 2 that supports the UUAA-MM procedure. In addition, the AN 5 may select an AMF 2 based on Local configuration information held by the AN 5 in addition to the information indicating the initiation request for the UUAA-MM procedure received in the AS message (RRC message) and the information instructing the USS. The AN 5 may select an AMF 2 that can be connected to the USS.

In addition, when a plurality of appropriate AMFs that support the UUAA-MM procedure can be selected, the AN 5 may select an AMF 2 by taking into account congestion information about each AMF 2. The AN 5 may receive the congestion information about the AMF 2 during initiation or periodic configuration updates.

In step 204, the AN 5 transmits to the selected AMF 2 a message requesting the initiation of the UUAA-MM procedure. The message requesting the initiation of the UUAA-MM procedure may be, for example, an NGAP (NG-RAN Application Protocol) message including information indicating the initiation request for the UUAA-MM procedure, or the information instructing the USS, or the information indicating the initiation request for the UUAA-MM procedure and information instructing the USS. The NGAP message may include the Registration request message transmitted from the UE 1. The message requesting initiation of the UUAA-MM procedure may also be, for example, an NGAP message including the information indicating the initiation request for the UUAA-MM procedure, the information instructing the USS, or the information indicating the initiation request for the UUAA-MM procedure and information instructing the USS. The NGAP message may be an Initial UE message. When the AMF 2 receives a message requesting initiation of the UUAA-MM procedure, it determines whether UUAA is required for the UAV, performs Registration processing, and then initiates the UUAA-MM procedure.

According to the operation shown in Fig. 2, in an RRC Connection Establishment procedure, the AN 5 selects an AMF based on the information indicating the initiation request for the UUAA-MM procedure, the information instructing the USS, or the information indicating the initiation request for the UUAA-MM procedure and information instructing the USS, and performs propagation (routing) of a NAS signal between the UE 1 and the selected AMF 2. This prevents selection of an AMF 2 that does not support the function expected by the UE 1.

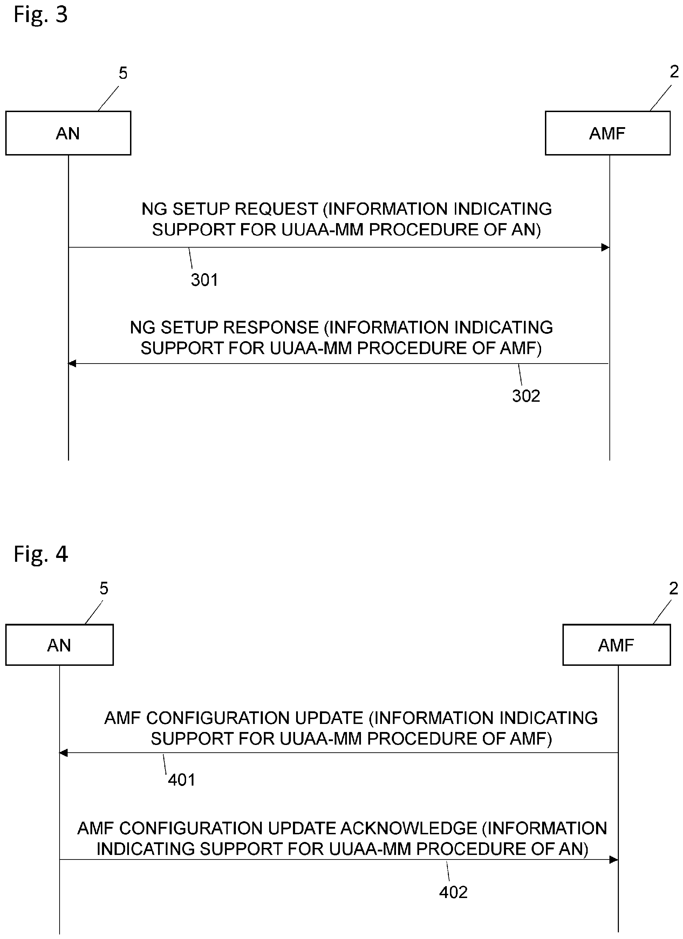

Fig. 3 shows an example of a management procedure for an NGAP interface. In step 301, if the AN 5 supports the UUAA-MM procedure, the AN 5 transmits to the AMF 2 an NG SETUP REQUEST message including support information for the UUAA-MM procedure. In step 301, when the AMF 2 receives the support information for the UUAA-MM procedure of the AN 4 from the AN 5, if the AMF 2 supports the UUAA-MM procedure, the AMF 2 transmits to the AN 5 the NG SETUP RESPONSE message including the support information for the UUAA-MM procedure of the AMF 2 and the information about the USS that can be connected. (Step 302) As an example, the AMF 2 may set the support information for the UUAA-MM procedure in the NG SETUP RESPONSE message only if the AN 5 supports the UUAA-MM procedure in step 301. If the AMF has received the NG SETUP REQUEST message that does not include the support information for the UUAA-MM procedure of the AN 5 from the AN 5, it may not transmit to the AN 5 the support information for the UUAA-MM procedure of the AMF 2 and the information about the USS that can be connected.

The NGAP messages in steps 301 and 302 may be other NGAP messages. It may be a RAN CONFIGURATION UPDATE message in step 301 and may be a RAN CONFIGURATION UPDATE ACKNOWLEDGE message in step 302.

According to this, when the AN 5 does not support the UUAA-MM procedure, there is no need to transmit information about the UUAA-MM procedure and the USS from the AMF 2 to the AN 5, and thus the amount of information in the message can be reduced.

Fig. 4 shows an example of a management procedure related to the NGAP interface by initiating the AMF 2. In step 401, if the AMF 2 supports the UUAA-MM procedure, the AMF 2 transmits to the AN 5 the AMF CONFIGURATION UPDATE message including the support information for the UUAA-MM procedure of the AMF 2 and the information about the USS that can be connected. When the AN 5 receives step 401, it transmits to the AMF 2 an AMF CONFIGURATION UPDATE ACKNOWLEDGE message including the support information for the UUAA-MM procedure of the AN 5 if the AN 5 supports the UUAA-MM procedure. (Step 402) As an example, the AN 5 may set the support information for the UUAA-MM procedure of the AN 5 in the AMF CONFIGURATION UPDATE ACKNOWLEDGE message only if the AMF 2 supports the UUAA-MM procedure in step 401. If the AN 5 receives from the AMF 2 the AMF CONFIGURATION UPDATE ACKNOWLEDGE message that does not include the support information for the UUAA-MM procedure of the AMF 2, the AN 5 may not transmit the support information for the UUAA-MM procedure of the AN 5 to the AMF 2.

The NGAP messages in steps 401 and 402 may be other NGAP messages.

According to this, when the AMF 2 does not support the UUAA-MM procedure, there is no need to transmit information about the UUAA-MM procedure from the AN 5 to the AMF 2, and thus the amount of information in the message can be reduced.

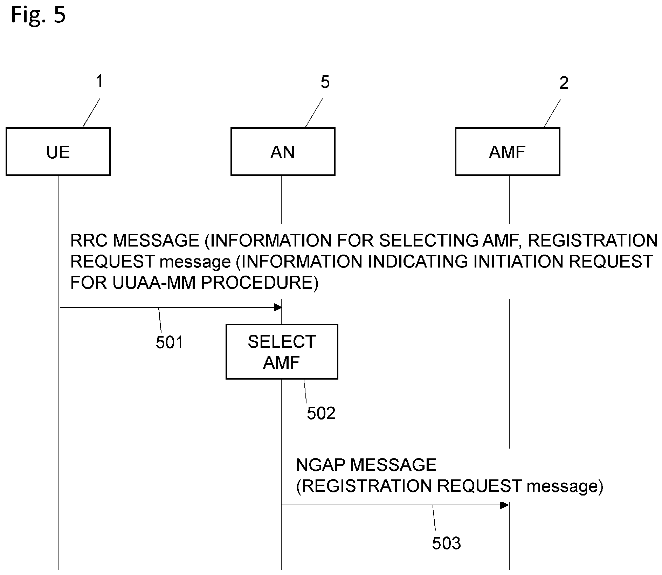

Fig. 5 shows an example of a Registration procedure. In step 501, the UE 1 transmits to the AN 5 an RRC message that includes at least one of the following parameters: a dedicated NAS Message parameter set with a Registration request message including information indicating the initiation request for the UUAA-MM procedure; a parameter indicating the information indicating the initiation request for the UUAA-MM procedure; and a parameter indicating information instructing the USS. The UE 1 may provide the AN 5 with the information indicating the initiation request for the UUAA-MM procedure only if certain conditions are met. Specifically, Serving PLMN (Home PLMN or Visited PLMN) can manage the information that the UE 1 can provide to the AN 5. For example, if the Serving PLMN designates that the information indicating the initiation request for the UUAA-MM procedure is deemed as privacy information, the UE 1 will not provide the information indicating the initiation request for the UUAA-MM procedure to the AN 5 in accordance with an instruction of the Serving PLMN. If the Serving PLMN allows the UE 1 to transmit the information indicating the initiation request for the UUAA-MM procedure to the AN 5, the UE 1 may transmit the information indicating the initiation request for the UUAA-MM procedure to the AN 5.

The UE 1 may make a determination based on system information informed by the AN 5 indicating whether it supports the initiation of the UUAA-MM procedure. The AN 5 may provide information as to whether it supports the initiation of the UUAA-MM procedure for each PLMN, for each cell supporting a specific frequency band, or for each network slice (for each S-NSSAI).

The AN 5 may provide information as to whether it supports the initiation of the UUAA-MM procedure to the UE 1 in an RRC message. In this case, the RRC message may be an RRC Setup message or other RRC message. The UE 1 may transmit information indicating a request to initiate the UUAA-MM procedure to the AN 5 if the RRC message includes the information indicating a support for initiating the UUAA-MM procedure.

When determining whether to support initiating the UUAA-MM procedure, the AN 5 may take into consideration the support status of the UUAA-MM procedure of the AMF 2 (whether or not the AMF 2 supports the UUAA-MM procedure) obtained using the management procedure for the NGAP interface disclosed in Figs. 3 and 4. For example, if the AMF 2 supports the UUAA-MM procedure, the AN 5 may support initiating the UUAA-MM procedure. A determination of whether the AN 5 supports initiating the UUAA-MM procedure may be made upon receipt of information from the UE indicating an initiation request for the UUAA-MM procedure. In addition, a determination of whether the AN 5 supports initiating the UUAA-MM procedure may be made before informing the UE of the information about the USS that can be connected in the system information or transmitting it to the UE in an RRC message.

Further, the UE 1 may determine a USS that can be connected based on the information about the USS received from the AN 5. As the information about the USS that can be connected to the AMF 2, the AN 5 may inform each PLMN, each cell supporting a specific frequency band, or each network slice (S-NSSAI).

The AN 5 may inform the UE 1 of the information about the USS that can be connected to the AMF 2 by an RRC message. In this case, the RRC message may be an RRC Setup message or other RRC message.

The AN 5 may consider the status of the information about the USS that can be connected to the AMF 2 obtained using the management procedure for the NGAP interface disclosed in Figs. 3 and 4.

The UE 1 may determine whether to transmit an initiation request for the UUAA-MM procedure based on the information about the USS that can be connected. For example, the UE 1 may transmit an initiation request to the UUAA-MM procedure when there is information about a USS that can be connected. In addition, when there is no information about a USS that can be connected, the UE 1 may not transmit an initiation request for the UUAA-MM procedure and instead may request information about a USS that can be connected to the AN 5.

The RRC message in step 501 may be an RRC Setup Request message, an RRC Setup Complete message, or other RRC message.

In step 502, the AN 5 selects the AMF 2 that supports the UUAA-MM procedure based on the information indicating the initiation request for the UUAA-MM procedure, the information instructing the USS, or the information indicating the initiation request for the UUAA-MM procedure and the information instructing the USS.

In step 503, the AN 5 transmits an NGAP message including a Registration request message to the selected AMF 2. The NGAP message may be an Initial UE message.

### <Second example embodiment>

This example embodiment provides an example of an operation of the AMF 2 in the UUAA-MM procedure. A configuration example of a cellular network according to this example embodiment may be similar to the example shown in Fig. 1.

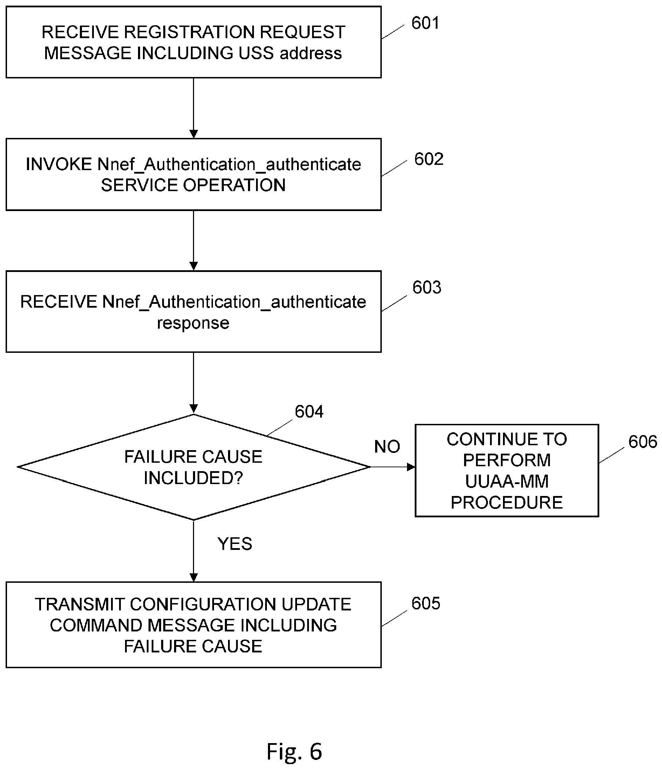

Fig. 6 is a flowchart showing an example of an operation of the AMF 2 according to this example embodiment. In step 601, the AMF 2 receives a REGISTRATION REQUEST message including a USS address (e.g. FQDN (Fully Qualified Domain Name)) from the UE 1. Note that the USS address is set in the service-level-AA container IE. If primary authentication is required, such as in the case of initial registration, the AMF 2 may perform the processing defined in step 9 of Figure 4.2.2.2.2-1 of TS 23.502. The AMF 2 may determine whether UUAA-MM for the UAV is required. The determination may be based on the UE having valid Aerial UE subscription information, the requirement to perform UUAA during Registration in accordance with a local operator policy, the UUAA not succeeding in previous UUAA-MM procedures, the UE providing the CAA-Level UAV ID, and so on. If the AMF 2 determines that the UUAA-MM is necessary, it may include a pending UUAA-MM indication in the REGISTRATION ACCEPT message for the REGISTRATION REQUEST message received in step 601 and transmit it to the UE 1. The UE 1 may manage the pending UUAA-MM indication as the UE context and wait until the UUAA-MM procedure is complete without attempting to register with the UAS service or establish U-Plane connectivity with the USS or UAV-C. The message including the USS address in step 601 may be a NAS message.

In step 602, the AMF 2 invokes a Nnef_Authentication_authenticate service operation of the UAS-NF 9. The service operation includes the USS address (e.g. FQDN). Step 602 may be initiated if the AMF 2 determines that a UUAA-MM for the UAV is required. Step 602 may also be performed if the S-NSSAI associated with the UAS service is part of an authorized NSSAI. Invoking the Nnef_Authentication_authenticate service operation may be transmission of a nef_Auth_Req message.

In step 603, the AMF 2 receives from the UAS-NF 9 an Nnef_Authentication_authenticate response in response to the invocation of the Nnef_Authentication_authenticate service operation. The Nnef_Authentication_authenticate response may be an Nnef_Auth_Resp message.

If the Nnef_Authentication_authenticate response in step 603 includes a failure cause (YES in step 604), the procedure proceeds to step 605. At this time, PEER_NOT_RESPONDING may be set, but not limited to, in the Nnef_Authentication_authenticate response as the failure cause (Application Error). Specifically, in response to the Nnef_Authentication_authenticate service operation call in step 602, the UAS-NF 9 attempts to invoke the Naf_Authentication_authenticate service operation, but there is no response from the USS (DN7). Therefore, the UAS-NF 9 may detect an occurrence of HTTP status code 504 Gateway Timeout, and set PEER_NOT_RESPONDING as the failure cause (Application Error). In step 605, the AMF 2 transmits a CONFIGURATION UPDATE COMMAND message including the failure cause to the UE 1. The failure cause may indicate that the USS cannot be identified based on the designated USS address or that there is no response from the USS based on the designated USS address. For example, the value indicating the failure cause may be, but is not limited to, "USS not available". Note that the failure cause is set in Service-level-AA response IE. Upon receiving the CONFIGURATION UPDATE COMMAND message including the failure cause in step 605, the UE 1 may transmit to the AN 5 or the AMF 2 a message requesting information about a USS different from the USS corresponding to the USS address transmitted in step 601 based on the failure cause. If the failure cause indicates that there is no response from the USS based on the designated USS address, the UE 1 may repeat the processing from step 601 up to a predetermined number of times using the same USS address. If the failure cause indicates that there is no response from the USS based on the designated USS address, the AMF 2 may repeat the processing from step 602 up to a predetermined number of times using the same USS address.

In contrast, if the Nnef_Authentication_authenticate response in step 603 does not include a failure cause (NO in step 604), the procedure proceeds to step 606. Here, if the Nnef_Authentication_authenticate response does not include a failure cause, the Nnef_Authentication_authenticate response may include information indicating that the USS has been identified and connected. For example, but not limited to, "USS available" may be set in the Service-level-AA response IE. In step 606, the AMF 2 continues to perform the UUAA-MM procedure. Specifically, the AMF 2 includes an authentication message from the USS received via the UAS-NF 9 in step 603 in the DL NAS TRANSPORT message and transmit it to the UE 1. The AMF 2 may include in the DL NAS TRANSPORT message information indicating that the USS has been identified and connected.

According to the operation shown in Fig. 6, the AMF 2 can notify the UE 1 of a USS-specific failure cause.

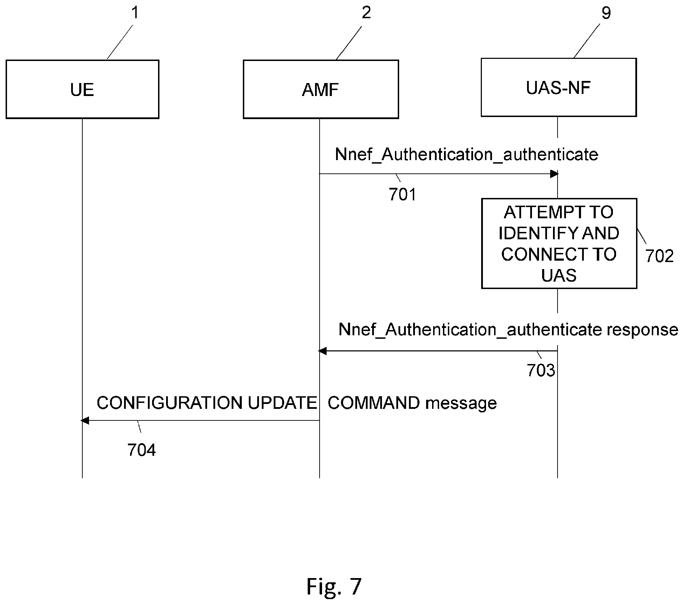

Fig. 7 shows an example of the UUAA-MM procedure. In step 701, the AMF 2 invokes the Nnef_Authentication_authenticate service operation. The service operation includes the USS address (e.g. FQDN).

In step 702, the UAS-NF 9 attempts to identify and connect to the USS based on the designated USS address. Specifically, the UAS-NF 9 identifies the USS using the designated USS address. Identifying the USS may be a USS address resolution. If the identification of the USS is successful, the UAS-NF 9 invokes the Naf_Authentication_authenticate service operation.

In step 703, the UAS-NF 9 notifies the AMF 2 of the identification and connection attempt result of the USS shown in step 702 by including them in the Nnef_Authentication_authenticate response. For example, if the USS cannot be identified or there is no response from the USS, the UAS-NF 9 may notify the AMF 2 of the failure cause.

In step 704, the AMF 2 transmits a CONFIGURATION UPDATE COMMAND message including the failure cause to the UE 1 if the USS address is set in the Service-level-AA container IE included in the REGISTRATION REQUEST message from the UE 1 and the AMF 2 has received the Nnef_Authentication_authenticate response including the failure cause. If the UE 1 receives a CONFIGURATION UPDATE COMMAND message including the failure cause and transmit a REGISTRATION REQUEST message with the USS address set in the Service-level-AA container IE, it may notify the upper layer of the failure cause.

### <Third example embodiments

This example embodiment provides a modified example of an operation of the AMF 2 in the UUAA-MM procedure. The configuration example of the cellular network according to this example embodiment may be similar to the example shown in Fig. 1.

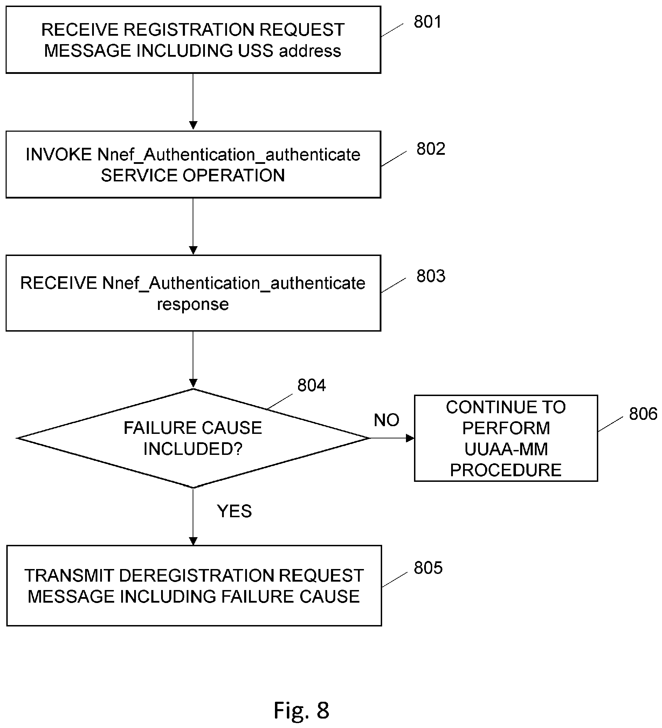

Fig. 8 is a flowchart showing an example of the operation of the AMF 2 according to this example embodiment. Steps 801 to 804 are the same as steps 601 to 604 in Fig. 6, respectively. If the Nnef_Authentication_authenticate response in step 803 includes the failure cause (YES in step 804), the procedure proceeds to step 805. At this time, PEER_NOT_RESPONDING may be set in the Nnef_Authentication_authenticate response as the failure cause (Application Error). Specifically, in response to the Nnef_Authentication_authenticate service operation invocation in step 802, the UAS-NF 9 attempts to invoke the Naf_Authentication_authenticate service operation, but there is no response from the USS (DN7). Therefore, the UAS-NF 9 may detect that the HTTP status code 504 Gateway Timeout has occurred, and set PEER_NOT_RESPONDING as the failure cause (Application Error). In step 805, the AMF 2 transmits a DEREGISTRATION REQUEST message including the failure cause to the UE 1. The failure cause may indicate that the USS cannot be identified based on the designated USS address or that there is no response from the USS based on the designated USS address. For example, the value indicating the failure cause may be, but is not limited to, "Cause #xx - USS not available" indicated by a 5GMM cause value.

In contrast, if the Nnef_Authentication_authenticate response in step 803 does not include the failure cause (NO in step 804), the procedure proceeds to step 806, which is the same as step 606 in Fig. 6.

According to the operation shown in Fig. 8, the AMF 2 can notify the UE 1 of a USS-specific failure cause.

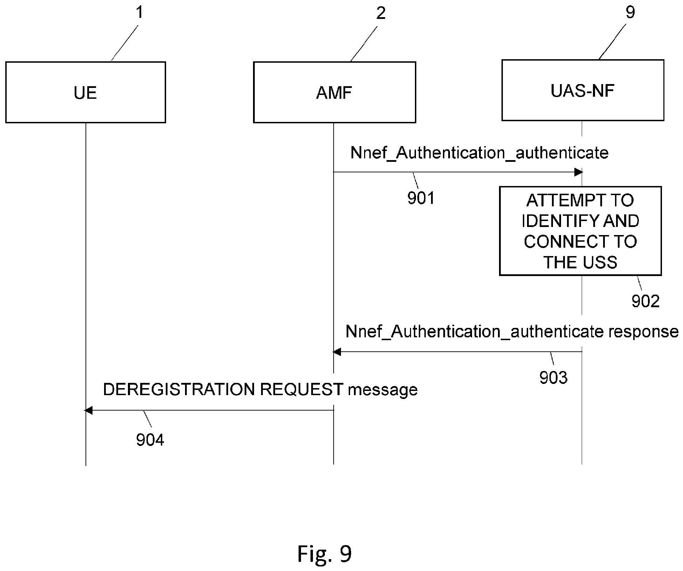

Fig. 9 shows an example of the UUAA-MM procedure. Steps 901 to 903 are the same as step 701 to 703 in Fig. 7, respectively. In step 904, when the USS address is set in the Service-level-AA container IE included in the REGISTRATION REQUEST message from the UE 1 and the Nnef_Authentication_authenticate response including the failure cause is received, the AMF 2 transmits the DEREGISTRATION REQUEST message including the failure cause to the UE 1. If the UE 1 receives the DEREGISTRATION REQUEST message including the failure cause and transmit a REGISTRATION REQUEST message with the USS address set in the Service-level-AA container IE, it may notify the upper layer of the failure cause.

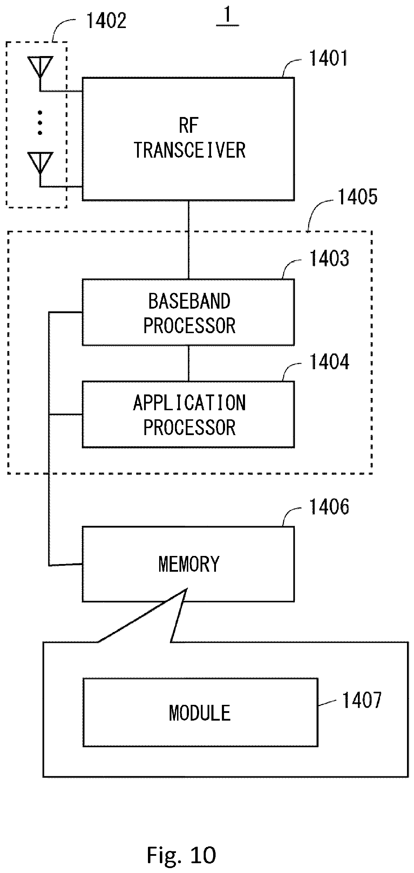

The following provides configuration examples of the UE 1, AMF 2, SMF 3, AUSF 4, AN 5, UPF 6, UDM 8, UAS-NF 9, and NSSAAF 10 according to the above-described example embodiments. Fig. 10 is a block diagram showing a configuration example of the UE 1. A Radio Frequency (RF) transceiver 1401 performs analog RF signal processing to communicate with NG-RAN nodes. The RF transceiver 1401 may include a plurality of transceivers. The analog RF signal processing performed by the RF transceiver 1401 includes frequency up-conversion, frequency down-conversion, and amplification. The RF transceiver 1401 is coupled to an antenna array 1402 and a baseband processor 1403. The RF transceiver 1401 receives modulated symbol data (or OFDM symbol data) from the baseband processor 1403, generates a transmission RF signal, and supplies the transmission RF signal to the antenna array 1402. Further, the RF transceiver 1401 generates a baseband reception signal based on a reception RF signal received by the antenna array 1402 and supplies the baseband reception signal to the baseband processor 1403. The RF transceiver 1401 may include an analog beamformer circuit for beam forming. The analog beamformer circuit includes, for example, a plurality of phase shifters and a plurality of power amplifiers.

The baseband processor 1403 performs digital baseband signal processing (i.e., data-plane processing) and control-plane processing for radio communication. The digital baseband signal processing includes (a) data compression/decompression, (b) data segmentation/concatenation, (c) composition/decomposition of a transmission format (i.e., transmission frame), (d) channel coding/decoding, (e) modulation (i.e., symbol mapping)/demodulation, and (f) generation of OFDM symbol data (i.e., baseband OFDM signal) by Inverse Fast Fourier Transform (IFFT). Meanwhile, the control-plane processing includes communication management of layer 1 (e.g., transmission power control), layer 2 (e.g., radio resource management and hybrid automatic repeat request (HARQ) processing), and layer 3 (e.g., signaling regarding attach, mobility, and call management).

The digital baseband signal processing by the baseband processor 1403 may include, for example, signal processing of a Service Data Adaptation Protocol (SDAP) layer, a Packet Data Convergence Protocol (PDCP) layer, a Radio Link Control (RLC) layer, a Medium Access Control (MAC) layer, and a Physical (PHY) layer. Further, the control-plane processing performed by the baseband processor 1403 may include processing of Non-Access Stratum (NAS) protocols, Radio Resource Control (RRC) protocols, and MAC Control Elements (CEs).

The baseband processor 1403 may perform Multiple Input Multiple Output (MIMO) encoding and pre-coding for beam forming.

The baseband processor 1403 may include a modem processor (e.g., Digital Signal Processor (DSP)) that performs the digital baseband signal processing and a protocol stack processor (e.g., a Central Processing Unit (CPU) or a Micro Processing Unit (MPU)) that performs the control-plane processing. In this case, the protocol stack processor, which performs the control-plane processing, may be integrated with an application processor 1404 described in the following.

The application processor 1404 is also referred to as a CPU, an MPU, a microprocessor, or a processor core. The application processor 1404 may include a plurality of processors (or processor cores). The application processor 1404 loads a system software program (Operating System (OS)) and various application programs (e.g., a call application, a WEB browser, a mailer, a camera operation application, and a music player application) from a memory 1406 or from another memory (not illustrated) and executes these programs, thereby providing various functions of the UE 1.

In some implementations, as represented by a dashed line (1405) in Fig. 10, the baseband processor 1403 and the application processor 1404 may be integrated on a single chip. In other words, the baseband processor 1403 and the application processor 1404 may be implemented in a single System on Chip (SoC) device 1405. An SoC device may be referred to as a Large-Scale Integration (LSI) or a chipset.

The memory 1406 is a volatile memory, a non-volatile memory, or a combination thereof. The memory 1406 may include a plurality of memory devices that are physically independent from each other. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1406 may include, for example, an external memory device that can be accessed from the baseband processor 1403, the application processor 1404, and the SoC 1405. The memory 1406 may include an internal memory device that is integrated into the baseband processor 1403, the application processor 1404, or the SoC 1405. Further, the memory 1406 may include a memory in a Universal Integrated Circuit Card (UICC).

The memory 1406 may store one or more software modules (computer programs) 1407 including instructions and data to perform the processing by the UE 1 described in the above example embodiments. In some implementations, the baseband processor 1403 or the application processor 1404 may load these software modules 1407 from the memory 1406 and execute the loaded software modules, thereby performing the processing of the UE 1 described in the above example embodiments with reference to the drawings.

The control-plane processing and operations performed by the UE 1 described in the above example embodiments can be achieved by elements other than the RF transceiver 1401 and the antenna array 1402, i.e., achieved by the memory 1406, which stores the software modules 1407, and one or both of the baseband processor 1403 and the application processor 1404.

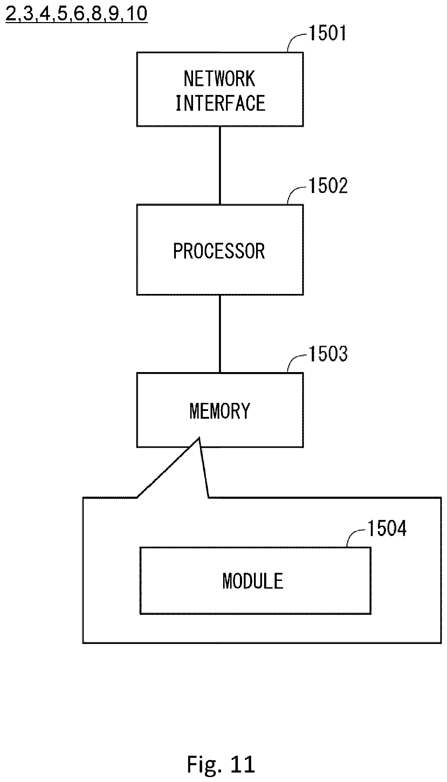

Fig. 11 shows a configuration example of the AMF 2. The SMF 3, AUSF 4, AN 5, UPF 6, UDM 8, UAS-NF 9, and NSSAAF 10 may also be configured as shown in Fig. 11. Referring to Fig. 11, the AMF 2 includes a network interface 1501, a processor 1502, and a memory 1503. The network interface 1501 is used to communicate, for example, with RAN nodes and with other network functions (NFs) or nodes in the 5GC. The other NFs or nodes in the 5GC include, for example, UDM, AUSF, SMF, UPF, and PCF. The network interface 1501 may include, for example, a network interface card (NIC) conforming to the IEEE 802.3 series.

The processor 1502 may be, for example, a microprocessor, a Micro Processing Unit (MPU), or a Central Processing Unit (CPU). The processor 1502 may include a plurality of processors.

The memory 1503 is composed of a volatile memory and a nonvolatile memory. The memory 1503 may include multiple memory devices that are physically independent. The volatile memory is, for example, a Static Random Access Memory (SRAM), a Dynamic RAM (DRAM), or a combination thereof. The non-volatile memory is, for example, a Mask Read Only Memory (MROM), an Electrically Erasable Programmable ROM (EEPROM), a flash memory, a hard disc drive, or any combination thereof. The memory 1503 may include a storage located apart from the processor 1502. In this case, the processor 1502 may access the memory 1503 via the network interface 1501 or an I/O interface (not illustrated).

The memory 1503 may store one or more software modules (computer programs) 1504 including instructions and data to perform the processing of the AMF 2 described in the above example embodiments. In some implementations, the processor 1502 may be configured to load the one or more software modules 1504 from the memory 1503 and execute the loaded software modules, thereby performing the processing of the AMF 2 described in the above example embodiments.

As described above with reference to Figs. 10 and 11, each of the processors that the UE 1, AMF 2, SMF 3, AUSF 4, AN 5, UPF 6, UDM 8, UAS-NF 9, and NSSAAF 10 according to the above example embodiments include executes one or more programs including instructions for causing a computer to execute an algorithm described with reference to the drawings. These programs can be stored and provided to a computer using any type of non-transitory computer readable media. Non-transitory computer readable media include any type of tangible storage media. Examples of non-transitory computer readable media include magnetic storage media (such as flexible disks, magnetic tapes, hard disk drives, etc.), optical magnetic storage media (e.g., magneto-optical disks), Compact Disc Read Only Memory (CD-ROM), CD-R, CD-R/W, and semiconductor memories (such as mask ROM, Programmable ROM (PROM), Erasable PROM (EPROM), flash ROM, Random Access Memory (RAM), etc.). These programs may be provided to a computer using any type of transitory computer readable media. Examples of transitory computer readable media include electric signals, optical signals, and electromagnetic waves. Transitory computer readable media can provide the programs to a computer via a wired communication line (e.g., electric wires, and optical fibers) or a wireless communication line.

The wireless terminal (User Equipment (UE)) in the present disclosure is an entity to be connected to a network via a wireless interface. It should be noted that the radio terminal (UE) in the present disclosure is not limited to a dedicated communication device, and it may be any device as follows having the communication functions herein explained.

The terms "User Equipment (UE)" (as the term is used by 3GPP), "mobile station", "mobile terminal", "mobile device", and "radio terminal (wireless device)" are generally intended to be synonymous with one another. The UE may include standalone mobile stations, such as terminals, cell phones, smartphones, tablets, cellular IoT (internet of things) terminals, and IoT devices. The terms "UE" and "radio terminal" also encompass devices that remain stationary for a long period of time.

A UE may, for example, be an item of equipment for production or manufacture and/or an item of energy related machinery (for example equipment or machinery such as: boilers; engines; turbines; solar panels; wind turbines; hydroelectric generators; thermal power generators; nuclear electricity generators; batteries; nuclear systems and/or associated equipment; heavy electrical machinery; pumps including vacuum pumps; compressors; fans; blowers; oil hydraulic equipment; pneumatic equipment; metal working machinery; manipulators; robots and/or their application systems; tools; molds or dies; rolls; conveying equipment; elevating equipment; materials handling equipment; textile machinery; sewing machines; printing and/or related machinery; paper projecting machinery; chemical machinery; mining and/or construction machinery and/or related equipment; machinery and/or implements for agriculture, forestry and/or fisheries; safety and/or environment preservation equipment; tractors; bearings; precision bearings; chains; gears; power transmission equipment; lubricators; valves; pipe fittings; and/or application systems for any of the previously mentioned equipment or machinery, etc.).

A UE may, for example, be an item of transport equipment (for example transport equipment such as: rolling stocks; motor vehicles; motorcycles; bicycles; trains; buses; carts; rickshaws; ships and other watercraft; aircraft; rockets; satellites; drones; balloons, etc.).

A UE may, for example, be an item of information and communication equipment (for example information and communication equipment such as: electronic computer and related equipment; communication and related equipment; electronic components, etc.).

A UE may, for example, be an item of refrigeration equipment, a refrigeration application product and equipment, trade and/or service industry equipment, a vending machine, an automatic service machine, an office machine or equipment, a consumer electronic and electronic appliance (for example a consumer electronic appliance such as: audio equipment; a speaker; a radio; video equipment; a television; an oven range; a rice cooker; a coffee maker; a dishwasher; a washing machine; dryers, a fan, an exhaust fan and related products, a vacuum cleaner, etc.).

A UE may, for example, be an electrical application system or equipment (for example an electrical application system or equipment such as: an x-ray system; a particle accelerator; radio isotope equipment; sonic equipment; electromagnetic application equipment; electronic power application equipment, etc.).

A UE may, for example, be an electronic lamp, a luminaire, a measuring instrument, an analyzer, a tester, or a surveying or sensing instrument (for example a surveying or sensing instrument such as: a smoke alarm; a human alarm sensor; a motion sensor; a wireless tag, etc.), a watch or clock, a laboratory instrument, optical apparatus, medical equipment and/or system, a weapon, an item of cutlery, a hand tool, or the like.

A UE may, for example, be a wireless-equipped personal digital assistant or related equipment (such as a wireless card or module designed for attachment to or for insertion into another electronic device (for example a personal computer, electrical measuring machine)).

A UE may be a device or a part of a system that provides applications, services, and solutions described below, as to "internet of things (IoT)", using a variety of wired and/or wireless communication technologies. IoT devices (or "things") may be equipped with appropriate electronics, software, sensors, network connectivity, and/or the like, which enable these devices to collect and exchange data with each other and with other communication devices. IoT devices may include automated equipment that follow software instructions stored in an internal memory. IoT devices may operate without requiring human supervision or interaction. IoT devices might also remain stationary and/or inactive for a long period of time. IoT devices may be implemented as a part of a (generally) stationary apparatus. IoT devices may also be embedded in non-stationary apparatus (e.g., vehicles) or attached to animals or persons to be monitored/tracked. IoT technology can be implemented on any communication devices that can connect to a communications network for sending/receiving data, regardless of whether such communication devices are controlled by human input or software instructions stored in memory. IoT devices are sometimes also referred to as Machine-Type Communication (MTC) devices, Machine-to-Machine (M2M) communication devices, or Narrow Band-IoT (NB-IoT) UE.

A UE may support one or more IoT or MTC applications.

Some examples of MTC applications are listed in 3GPP TS 22.368 V13.2.0 (2017-01-13), Annex B (the contents of which are incorporated herein by reference). This list is not exhaustive and is intended to be indicative of some examples of MTC applications. In this list, the Service Area of the MTC applications includes Security, Tracking & Tracing, Payment, Health, Remote Maintenance/Control, Metering, and Consumer Devices.

Examples of the MTC applications regarding Security include Surveillance systems, Backup for landline, Control of physical access (e.g., to buildings), and Car/driver security.

Examples of the MTC applications regarding Tacking & Tracing include Fleet Management, Order Management, Telematics insurance: Pay as you drive (PAYD), Asset Tracking, Navigation, Traffic information, Road tolling, and Road traffic optimisation/steering.

Examples of the MTC applications regarding Payment include Point of sales (POS), Vending machines, and Gaming machines.

Examples of the MTC applications regarding Health include Monitoring vital signs, Supporting the aged or handicapped, Web Access Telemedicine points, and Remote diagnostics.

Examples of the MTC applications regarding Remote Maintenance/Control include Sensors, Lighting, Pumps, Valves, Elevator control, Vending machine control, and Vehicle diagnostics.

Examples of the MTC applications regarding Metering include Power, Gas, Water, Heating, Grid control, and Industrial metering.

Examples of the MTC applications regarding Consumer Devices include Digital photo frames, Digital cameras, and eBooks.

Applications, services, and solutions may be an Mobile Virtual Network Operator (MVNO) service/system, an emergency radio communication service/system, a Private Branch exchange (PBX) service/system, a PHS/Digital Cordless Telecommunications service/system, a Point of sales (POS) service/system, an advertise calling service/system, a Multimedia Broadcast and Multicast Service (MBMS) service/system, a Vehicle to Everything (V2X) service/system, a train radio service/system, a location related service/system, a Disaster/Emergency Wireless Communication Service/system, an Internet of Things (IoT) service/system, a community service/system, a video streaming service/system, a femto cell application service/system, a Voice over LTE (VoLTE) service/system, a radio tag service/system, a charging service/system, a radio on demand service/system, a roaming service/system, an activity monitoring service/system, a telecom carrier/communication NW selection service/system, a functional restriction service/system, a Proof of Concept (PoC) service/system, a personal information management service/system, a display video service/system, a non-communication service/system, an ad-hoc NW/Delay Tolerant Networking (DTN) service/system, etc.

The above-described UE categories are merely examples of applications of the technical ideas and example embodiments described in the present disclosure. The UE described in this disclosure is not limited to these examples and various modifications can be made thereto by those skilled in the art.

The above-described example embodiments are merely examples of applications of the technical ideas obtained by the inventors. These technical ideas are not limited to the above-described example embodiments and various modifications can be made thereto.

The whole or part of the example embodiments disclosed above can be described as, but not limited to, the following supplementary notes.

### (Supplementary note 1-1)

An access network node comprising:
a memory; and
at least one processor coupled to the memory, wherein
the at least one processor is configured to receive from at least one core network node first information indicating whether authentication and authorization procedure for an Uncrewed Aerial Vehicle (UAV) (UUAA-MM procedure) in mobility management is supported,
the at least one processor is configured to receive from a User Equipment (UE) second information indicating an initiation request for the UUAA-MM procedure after receiving the first information, and
the at least one processor is configured to transmit, in response to the receipt of the second information, a message requesting initiation of the UUAA-MM procedure to a first core network node supporting the UUAA-MM procedure among the at least one core network node.

### (Supplementary note 1-2)

The access network node according to supplementary note 1-1, wherein the at least one processor is configured to select the first core network node supporting the UUAA-MM procedure from among the at least one core network node based on the first information and the second information.

### (Supplementary note 1-3)

The access network node according to supplementary note 1-1 or 1-2, wherein the second information is at least one of a CAA-Level UAV ID, a function type related to the UAV that the UE expects from a network, a Service Type (SST) corresponding to the UUAA-MM procedure in Single Network Slice Selection Assistance Information (S-NSSAI), and a Slice Differentiator (SD) corresponding to the UUAA-MM procedure in the S-NSSAI.

### (Supplementary note 1-4)

The access network node as described in any one of supplementary notes 1-1 to 1-3, wherein
the at least one processor is configured to receive from the UE third information about a Uncrewed Aerial System Service Supplier (USS) together with the second information, and
the at least one processor is configured to select the first core network node that supports the UUAA-MM procedure and can be connected to the USS from among the at least one core network node based on the first information, the second information, and the third information.

### (Supplementary note 1-5)

The access network node according to supplementary note 1-4, wherein the third information is at least one of a CAA-Level UAV ID, a USS address, information indicating the USS, a Service Type (SST) corresponding to the USS in the Single Network Slice Selection Assistance Information (S-NSSAI), and a Slice Differentiator (SD) corresponding to the USS in the S-NSSAI.

### (Supplementary note 1-6)

The access network node according to any one of supplementary notes 1-1 to 1-5, wherein, when a plurality of the first core network nodes supporting the UUAA-MM procedure can be selected from among the at least one core network node based on the first information, the at least one processor is configured to select one first core network node based on congestion information about the plurality of first core network nodes.

### (Supplementary note 1-7)

The access network node according to any one of supplementary notes 1-1 to 1-6, wherein the second information is transmitted from the UE to the access network node in at least one of the following cases:
- when transmission by the UE is allowed by a serving Public Land Mobile Network (PLMN) of the UE;
- when the UE receives system information informed by the access network node indicating a support for the initiation of the UUAA-MM procedure; and
- when the UE receives from the access network node an RRC message including information indicating the support for the initiation of the UUAA-MM procedure.

### (Supplementary note 1-8)

The access network node according to any one of supplementary notes 1-1 to 1-7, wherein the message requesting the initiation of the UUAA-MM procedure is a message including the second information.

### (Supplementary note 1-9)

The access network node according to any one of supplementary notes 1-1 to 1-8, wherein
the at least one processor is configured to receive from the at least one core network node fourth information indicating the Uncrewed Aerial System Service Supplier (USS) to which the at least one core network node can connect, and
the at least one processor is configured to transmit the fourth information to the UE.

### (Supplementary note 1-10)

A core network node comprising:
a memory; and
at least one processor coupled to the memory, wherein
the at least one processor is configured to transmit to an access network node first information indicating whether authentication and authorization procedure for Uncrewed Aerial Vehicles (UAV) (UUAA-MM procedure) in mobility management is supported,
the at least one processor is configured to receive from the access network node a message requesting initiation of the UUAA-MM procedure,
the at least one processor is configured to initiate the UUAA-MM procedure for a User Equipment (UE) based on the message, and
the message is transmitted from the core network node to the access network node in response to the access network node receiving from the UE the second information indicating an initiation request for the UUAA-MM procedure from the access network node after the first information has been transmitted from the core network node to the access network node.

### (Supplementary note 1-11)

An User Equipment (UE) comprising:
a memory; and
at least one processor coupled to the memory, wherein
the at least one processor is configured to transmit to an access network node second information indicating an initiation request for authentication and authorization procedure for an Uncrewed Aerial Vehicle (UAV) (UUAA-MM procedure) in mobility management,
the at least one processor is configured to perform the UUAA-MM procedure with a core network node supporting the UUAA-MM procedure,
the access network node receiving the second information transmits to the core network node a message requesting initiation of the UUAA-MM procedure, and
the core network node is selected based on the first information received by the access network node from the core network node indicating whether the UUAA-MM procedure is supported.

### (Supplementary note 1-12)

A method in access network node, the method comprising:
receiving from at least one core network node first information indicating whether authentication and authorization procedure for an Uncrewed Aerial Vehicle (UAV) (UUAA-MM procedure) in mobility management is supported;
receiving from a User Equipment (UE) second information indicating an initiation request for the UUAA-MM procedure after receiving the first information; and
transmitting, in response to the receipt of the second information, a message requesting the initiation of the UUAA-MM procedure to a first core network node supporting the UUAA-MM procedure among the at least one core network node.

### (Supplementary note 1-13)

A method in a core network node, the method comprising:
transmitting to an access network node first information indicating whether authentication and authorization procedure for Uncrewed Aerial Vehicles (UAV) (UUAA-MM procedure) in mobility management is supported;
receiving from the access network node a message requesting initiation of the UUAA-MM procedure; and
initiating the UUAA-MM procedure for a User Equipment (UE) based on the message, wherein the message is transmitted from the access network node to the access network node after the first information is transmitted from the core network node to the access network node when the access network node receives from the UE the second information instructing the initiation request for the UUAA-MM procedure.

### (Supplementary note 1-14)

A method in a User Equipment (UE), the method comprising:
transmitting to an access network node second information indicating an initiation request for authentication and authorization procedure for an Uncrewed Aerial Vehicle (UAV) (UUAA-MM procedure) in mobility management; and
performing the UUAA-MM procedure with a core network node supporting the UUAA-MM procedure, wherein
the access network node receiving the second information transmits to the core network node a message requesting initiation of the UUAA-MM procedure, and
the core network node is selected based on the first information received by the access network node from the core network node indicating whether the UUAA-MM procedure is supported.

### (Supplementary note 1-15)

A non-transitory computer readable medium storing a program for causing a computer to execute a method in access network node, the method comprising:
receiving from at least one core network node first information indicating whether authentication and authorization procedure for an Uncrewed Aerial Vehicle (UAV) (UUAA-MM procedure) in mobility management is supported;
receiving from a User Equipment (UE) second information indicating an initiation request for the UUAA-MM procedure after receiving the first information; and
transmitting, in response to the receipt of the second information, a message requesting the initiation of the UUAA-MM procedure to a first core network node supporting the UUAA-MM procedure among the at least one core network node.

### (Supplementary note 1-16)

A non-transitory computer readable medium storing a program for causing a computer to execute a method in a core network node, the method comprising:
transmitting to an access network node first information indicating whether authentication and authorization procedure for Uncrewed Aerial Vehicles (UAV) (UUAA-MM procedure) in mobility management is supported;
receiving from the access network node a message requesting initiation of the UUAA-MM procedure; and
initiating the UUAA-MM procedure for a User Equipment (UE) based on the message, wherein the message is transmitted from the access network node to the access network node after the first information is transmitted from the core network node to the access network node when the access network node receives from the UE the second information instructing the initiation request for the UUAA-MM procedure.

### (Supplementary note 1-17)

A non-transitory computer readable medium storing a program for causing a computer to execute a method in a User Equipment (UE), the method comprising:
transmitting to an access network node second information indicating an initiation request for authentication and authorization procedure for an Uncrewed Aerial Vehicle (UAV) (UUAA-MM procedure) in mobility management; and
performing the UUAA-MM procedure with a core network node supporting the UUAA-MM procedure, wherein
the access network node receiving the second information transmits to the core network node a message requesting initiation of the UUAA-MM procedure, and
the core network node is selected based on the first information received by the access network node from the core network node indicating whether the UUAA-MM procedure is supported.

### (Supplementary note 2-1)

A first core network node comprising:
a memory; and
at least one processor coupled to the memory, wherein
the at least one processor is configured to receive from a User Equipment (UE) a first NAS message including an address of a Uncrewed Aerial System (UAS) Service Supplier (USS),
the at least one processor is configured to transmit to a second core network node providing a UAS service an invocation message of a Network Exposure Function (NEF) authentication service including the address of the USS,
the at least one processor is configured to receive a response message to the invocation message from the second core network node, and
the at least one processor is configured to transmit to the UE information indicating a service failure for the USS corresponding to the address of the USS when the response message includes a failure cause for the USS corresponding to the address of the USS.

### (Supplementary note 2-2)

The first core network node according to supplementary note 2-1, wherein
the failure cause is one of:
an absence of a response from the USS to the authentication request message transmitted by the second core network node to the USS corresponding to the address of the USS in response to the invocation message, and
an inability to identify the USS based on the address of the USS.

### (Supplementary note 2-3)

The first core network node according to supplementary note 2-1 or 2-2, wherein the at least one processor is configured to transmit to the UE information indicating a service failure for the USS corresponding to the address of the USS in a CONFIGURATION UPDATE COMMAND message or a DEREGISTRATION REQUEST message.

### (Supplementary note 2-4)

A User Equipment (UE) comprising:
a memory; and
at least one processor coupled to the memory, wherein
the at least one processor is configured to transmit to a first core network node a first NAS message including an address of an Uncrewed Aerial System (UAS) Service Supplier (USS), and
the at least one processor is configured to receive from the first core network node information indicating a service failure for the USS corresponding to the address of the USS, when a response message to an invocation message of a Network Exposure Function (NEF) authentication service including the address of the USS received by the first core network node from a second core network node providing a UAS service includes a failure cause for the USS corresponding to the address of the USS.

### (Supplementary note 2-5)

A second core network node providing an Uncrewed Aerial System (UAS) service, the second core network node comprising:
a memory; and
at least one processor coupled to the memory, wherein
the at least one processor is configured to receive from a first core network node an invocation message of a Network Exposure Function (NEF) authentication service including an address of a UAS Service Supplier (USS),
the at least one processor is configured to transmit to the first core network node a response message to the invocation message, and
the response message includes a failure cause for the USS corresponding to the address of the USS, thereby causing the first core network node to transmit to the UE information indicating a service failure for the USS corresponding to the address of the USS.

### (Supplementary note 2-6)

A method in a first core network node, the method comprising:
receiving from a User Equipment (UE) a first NAS message including an address of a Uncrewed Aerial System (UAS) Service Supplier (USS);
transmitting to a second core network node providing a UAS service an invocation message of a Network Exposure Function (NEF) authentication service including the address of the USS;
receiving a response message to the invocation message from the second core network node; and
transmitting to the UE information indicating a service failure for the USS corresponding to the address of the USS when the response message includes a failure cause for the USS corresponding to the address of the USS.

### (Supplementary note 2-7)

A method in a User Equipment (UE), the method comprising:
transmitting to a first core network node a first NAS message including an address of an Uncrewed Aerial System (UAS) Service Supplier (USS); and
receiving from the first core network node information indicating a service failure for the USS corresponding to the address of the USS, when a response message to an invocation message of a Network Exposure Function (NEF) authentication service including the address of the USS received by the first core network node from a second core network node providing a UAS service includes a failure cause for the USS corresponding to the address of the USS.

### (Supplementary note 2-8)

A method in a second core network node providing an Uncrewed Aerial System (UAS) service, the method comprising:
receiving from a first core network node an invocation message of a Network Exposure Function (NEF) authentication service including an address of a UAS Service Supplier (USS); and
transmitting to the first core network node a response message to the invocation message, wherein the response message includes a failure cause for the USS corresponding to the address of the USS, thereby causing the first core network node to transmit to the UE information indicating a service failure for the USS corresponding to the address of the USS.

### (Supplementary note 2-9)

A non-transitory computer readable medium storing a program for causing a computer to execute a method in a first core network node, the method comprising:
receiving from a User Equipment (UE) a first NAS message including an address of a Uncrewed Aerial System (UAS) Service Supplier (USS);
transmitting an invocation message of a Network Exposure Function (NEF) authentication service including the address of the USS to a second core network node providing the UAS service;
receiving a response message to the invocation message from the second core network node; and
transmitting to the UE information indicating a service failure for the USS corresponding to the address of the USS when the response message includes a failure cause for the USS corresponding to the address of the USS.

### (Supplementary note 2-10)

A non-transitory computer readable medium storing a program for causing a computer to execute a method in a User Equipment (UE), the method comprising:
transmitting to a first core network node a first NAS message including an address of an Uncrewed Aerial System (UAS) Service Supplier (USS); and
receiving from the first core network node information indicating a service failure for the USS corresponding to the address of the USS, when a response message to an invocation message of a Network Exposure Function (NEF) authentication service including the address of the USS received by the first core network node from a second core network node providing a UAS service includes a failure cause for the USS corresponding to the address of the USS.

### (Supplementary note 2-11)

A non-transitory computer readable medium storing a program for causing a computer to execute a method in a second core network node providing an Uncrewed Aerial System (UAS) service, the method comprising:
receiving from a first core network node an invocation message of a Network Exposure Function (NEF) authentication service including an address of a UAS Service Supplier (USS); and
transmitting to the first core network node a response message to the invocation message, wherein
the response message includes a failure cause for the USS corresponding to the address of the USS, thereby causing the first core network node to transmit to the UE information indicating a service failure for the USS corresponding to the address of the USS.

This application claims the priority based on Japanese Patent Application No. 2021-160147 filed September 29, 2021, disclosure of which is incorporated by reference in its entirety.

### Reference Signs List

- 1: UE
- 2: AMF
- 3: SMF
- 4: AUSF
- 5: AN
- 6: UPF
- 7: DN
- 8: UDM
- 9: UAS-NF
- 10: NSSAAF
- 1403: BASEBAND PROCESSOR
- 1404: APPLICATION PROCESSOR
- 1406: MEMORY
- 1407: MODULE
- 1502: PROCESSOR
- 1503: MEMORY
- 1504: MODULE

## Claims

1. A first node for mobility management in a core network, the first node comprising:
transmission means for transmitting a first message to a second node for authentication and authorization of Uncrewed Aerial Vehicle (UAV) in the core network, the first message requesting the second node to invoke a service operation for the authentication and authorization of UAV for a third node related to an Uncrewed Aerial System (UAS) Service Supplier (USS); and
reception means for receiving, from the second node, a first response message in response to the first message in a case where the first node does not receive, from the third node, a response in response to the invocation of the service operation during predetermined period, wherein the first response message includes a cause value being set to PEER NOT RESPONDING.

2. The first node according to claim 1, wherein the first response message is HTTP status code 504 Gateway Timeout.

3. The first node according to claim 1, further comprising:
reception means for receiving from a User Equipment (UE) a Registration Request message requesting a UAS service, the Registration Request message including an address of the third node;
transmission means for transmitting a Registration Accept message to the UE before transmitting the first message, the Registration Accept message including a Pending indication indicating that the authentication and authorization of UAV is pending; and
transmission means for transmitting, after receiving the first response message, a second message to the UE indicating that the authentication and authorization of UAV has failed.

4. The first node according to claim 3, wherein the second message is a Configuration Update Command message including a failure cause indicating that the authentication and authorization UAV has failed.

5. The first node according to claim 3, wherein the second message is a Deregistration Request message including a failure cause indicating that the authentication and authorization of UAV has failed.

6. The first node according to claim 3, further comprising determination means for determining whether the authentication and authorization of UAV is required when the first node receives the Registration Request message, wherein
the determination is based on at least one of:
the UE holds valid Aerial UE subscription information;
execution of the authentication and authorization of UAV is required during registration in accordance with a local operator policy;
previous procedures for the authentication and authorization of UAV have not been successful;
the UE provides a Civil Aviation Administration (CAA)-Level UAV Identity (CAA-Level UAV ID); and
the Pending indication is included in the Registration Accept message when the authentication and authorization of UAV is required.

7. The first node according to claim 1, wherein
the first node is an Access and Mobility Management Function (AMF),
the second node is an Uncrewed Aerial System Network Function (UAS-NF), and
the third node is a USS.

8. A second node for authentication and authorization of Uncrewed Aerial Vehicle (UAV) in a core network, the second node comprising:
reception means for receiving, from a first node for mobility management in the core network, a first message requesting authentication of UAV;
transmission means for transmitting, to a third node for an Uncrewed Aerial System (UAS) Service Supplier (USS), a second message requesting a service operation of the authentication and authorization of UAV after receiving the first message; and
transmission means for transmitting, to the first node, a first response message in response to the first message in a case where the second node does not receive, from the third node, a response in response to the second message during predetermined period, wherein the first response message includes a cause value being set to PEER NOT RESPONDING.

9. The second node according to claim 8, wherein the first response message is HTTP status code 504 Gateway Timeout.

10. The second node according to claim 8, wherein the first response message causes the first node to transmit a third message to the User Equipment (UE) indicating that the authentication and authorization of UAV has failed.

11. The second node according to claim 10, wherein the third message is a Configuration Update Command message including a failure cause indicating that the authentication and authorization of UAV has failed.

12. The second node according to claim 10, wherein the third message is a Deregistration Request message including a failure cause indicating that the authentication and authorization of UAV has failed.

13. The second node according to claim 8, wherein
the reception means is configured to receive the first message from the first node when it is determined by the first node that the authentication and authorization of UAV is required, and
the determination is based on at least one of:
the User Equipment (UE) holds valid Aerial UE subscription information;
execution of the authentication and authorization of UAV is required during registration in accordance with a local operator policy;
previous procedures for the authentication and authorization of UAV have not been successful; and
the UE provides a Civil Aviation Administration (CAA)-Level UAV Identity (CAA-Level UAV ID).

14. The second node according to claim 8, wherein
the first node is an Access and Mobility Management Function (AMF),
the second node is an Uncrewed Aerial System Network Function (UAS-NF), and
the third node is a USS.

15. A method for a first node for mobility management in a core network, the method comprising:
transmitting, to a second node for authentication and authorization of Uncrewed Aerial Vehicle (UAV) in the core network, a first message, the first message requesting the second node to invoke a service operation for the authentication and authorization of UAV for a third node related to an Uncrewed Aerial System (UAS) Service Supplier (USS); and
receiving, from the second node, a first response message in response to the first message in a case where the first node does not receive, from the third node, a response in response to the invocation of the service operation during predetermined period, wherein the first response message includes a cause value being set to PEER NOT RESPONDING.

16. The method according to claim 15, wherein the first response message is HTTP status code 504 Gateway Timeout.

17. The method according to claim 15, further comprising:
receiving from a User Equipment (UE) a Registration Request message requesting a UAV service, the Registration Request message including an address of the third node;
transmitting a Registration Accept message to the UE before transmitting the first message, the Registration Accept message including a Pending indication indicating that the authentication and authorization of UAV is pending; and
transmitting, after receiving the first response message, a second message to the UE indicating that the authentication and authorization of UAV has failed.

18. The method according to claim 17, wherein the second message is a Configuration Update Command message including a failure cause indicating that the authentication and authorization of UAV has failed.

19. The method according to claim 17, wherein the second message is a Deregistration Request message including a failure cause indicating that the authentication and authorization of UAV has failed.

20. The method according to claim 17, further comprising determining whether the authentication and authorization of UAV is required in response to the receipt of the Registration Request message, wherein
the determination is based on at least one of:
the UE holds valid Aerial UE subscription information;
execution of the authentication and authorization of UAV is required during registration in accordance with a local operator policy;
previous procedures for the authentication and authorization of UAV have not been successful;
the UE provides a Civil Aviation Administration (CAA)-Level UAV Identity (CAA-Level UAV ID); and
the Pending indication is included in the Registration Accept message when the authentication and authorization of UAV is required.

21. The method according to claim 15, wherein
the first node is an Access and Mobility Management Function (AMF),
the second node is an Uncrewed Aerial System Network Function (UAS-NF), and
the third node is a USS.

22. A method for a second node for authentication and authorization of Uncrewed Aerial Vehicle (UAV) in a core network, the method comprising:
receiving, from a first node for mobility management in the core network, a first message requesting authentication of UAV;
transmitting, to a third node for an Uncrewed Aerial System (UAS) Service Supplier (USS), a second message requesting a service operation of the authentication and authorization of UAV after receiving the first message; and
transmitting, to the first node, a first response message in response to the first message in a case where the second node does not receive, from the third node, a response in response to the second message during predetermined period, wherein the first response message includes a cause value being set to PEER NOT RESPONDING.

23. The method according to claim 22, wherein the first response message is HTTP status code 504 Gateway Timeout.

24. The method according to claim 22, wherein the first response message causes the first node to transmit a third message to the User Equipment (UE) indicating that the authentication and authorization of UAV has failed.

25. The method according to claim 24, wherein the third message is a Configuration Update Command message including a failure cause indicating that the authentication and authorization of UAV has failed.

26. The method according to claim 24, wherein the third message is a Deregistration Request message including a failure cause indicating that the authentication and authorization of UAV has failed.

27. The method according to claim 22, wherein
the first message is received from the first node when it is determined by the first node that the authentication and authorization of UAV is required, and
the determination is based on at least one of:
the User Equipment (UE) holds valid Aerial UE subscription information;
execution of the authentication and authorization of UAV is required during registration in accordance with a local operator policy;
previous procedures for the authentication and authorization of UAV have not been successful; and
the UE provides a Civil Aviation Administration (CAA)-Level UAV Identity (CAA-Level UAV ID).

28. The method according to claim 22, wherein
the first node is an Access and Mobility Management Function (AMF),
the second node is an Uncrewed Aerial System Network Function (UAS-NF), and
the third node is a USS.
